(19) **Europäisches Patentamt European Patent Office Office européen des brevets**

(11) **EP 1 419 649 B1**

(12) **EUROPEAN PATENT SPECIFICATION**

(45) Date of publication and mention of the grant of the patent:
**14.05.2008 Bulletin 2008/20**

(51) Int Cl.:
*H04M 11/06* (2006.01)      *H04B 10/20* (2006.01)

(21) Application number: **02753100.3**

(22) Date of filing: **14.08.2002**

(86) International application number:
**PCT/FI2002/000671**

(87) International publication number:
**WO 2003/017634 (27.02.2003 Gazette 2003/09)**

(54) **METHOD OF ESTABLISHING A SUBSCRIBER CONNECTION AND SYSTEM UTILISING THE METHOD**

VERFAHREN ZUR HERSTELLUNG EINER TEILNEHMERVERBINDUNG UND SYSTEM MIT DEM VERFAHREN

PROCEDE D'ETABLISSEMENT D'UNE CONNEXION D'ABONNE ET SYSTEME DANS LEQUEL LEDIT PROCEDE EST UTILISE

(84) Designated Contracting States:
**AT BE BG CH CY CZ DE DK EE ES FI FR GB GR IE IT LI LU MC NL PT SE SK TR**

(30) Priority: **17.08.2001 FI 20011665**

(43) Date of publication of application:
**19.05.2004 Bulletin 2004/21**

(73) Proprietors:
• **Laamanen, Heikki**
 **02230 Espoo (FI)**
• **Gowda, Umesh**
 **02230 Espoo (FI)**

(72) Inventors:
• **Laamanen, Heikki**
 **02230 Espoo (FI)**
• **Gowda, Umesh**
 **02230 Espoo (FI)**

(56) References cited:
 **WO-A1-00/33489      WO-A1-93/26101**

• **HO K.P. ET AL: 'Broadband access using subcarrier multiplexing and asymmetric digital subscriber lines' ISSE URSI INTERNATIONAL SYMPOSIUM ON SIGNALS, SYSTEMS AND ELECTRONICS 29 September 1998 - 02 October 1998, pages 34 - 39, XP010316786**
• **Korean Patent Abstracts XP002978836 & KR 2001 036 085 A (SAMSUNG ELECTRONICS CO) 07 May 2001**

## Description

The invention relates to a method and a system for establishing a digital subscriber connection between a central site and a network terminating unit of a subscriber.

Accordingly, the invention consists of a method of establishing a digital FTTC (Fiber To The Curb, Fiber To The Cabinet) subscriber connection comprising an optical fiber and a metallic twisted pair cable. The invention also consists of converter equipment connecting the fiber and the cable, the said converter equipment being an integral element of such subscriber connection.

## Background of the invention

In a conventional subscriber network based on a twisted metallic pair cable, each subscriber is connected to the local telephone exchange or concentrator via his own cable pair. A typical length of cable may be several kilometers. If the pair cable is utilized for transmitting digital information by means of DSL modem techniques, the transfer characteristics of the cable limit the highest achievable transmission rate from a few hundred kilobits per second to a few megabits per second, strongly depending on the cable length.

Subsequently the term "central site" represents the local telephone exchange or concentrator site.

When utilizing a conventional subscriber network for digital transmission, the signal conversion in the interface of the subscriber cable and the trunk network is typically carried out by DSLAM equipment (Digital Subscriber Line Access Multiplexer). A DSLAM comprises DSL modems, which transform the digital signal into analog form suitable for transmission over the metallic cable. The DSL modems also receive the signal coming from the far end subscriber transmitter and convert the signal into digital form. Furthermore, the DSLAM multiplexes traffic from several subscribers and transmits the traffic to the trunk network.

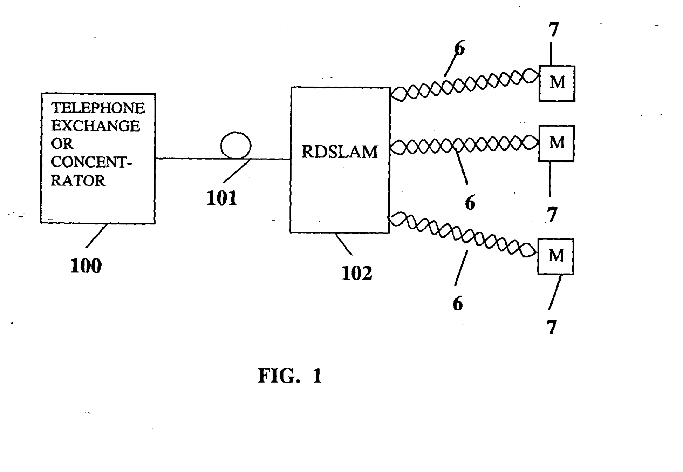

In a digital FTTC subscriber network, data streams from several subscribers are multiplexed to an optical fiber and transported over the fiber closer to the subscribers so that the lengths of the metallic pair cables are substantially shorter as compared to a conventional subscriber network. As a consequence, the digital transmission speed can be increased considerably, because the shorter the cable is, the higher is the usable bandwidth. A new problem arises in an FTTC network from the fact that now the DSLAM is placed nearer to the subscribers and away from the central site. The DSLAM of a conventional network is installed at the central site, where it is much easier to arrange the necessary power supply and where the environmental factors crucial for the equipment electronics (temperature and humidity) are easier to control. In an FTTC network topology, the remote DSLAM (subsequently RDSLAM) has to be installed, for example, in a box located at a street corner, where the power supply arrangement is laborious and where the electronics suffer from wide temperature and humidity variations. A substantial portion of the electronics of DSLAM equipment is located in the digital transceivers of the DSL modems and in the circuitry multiplexing the data stream onto the optical fiber. Also, a substantial amount of power consumption is used for supplying the said electronics. FIG. **1** represents a FTTC network topology based on known technology. An optical fiber **101** connects the RDSLAM equipment **102** to the central site equipment **100**. At the central site, the fiber is connected to a switching device of the trunk network, e.g. an ATM switch or an IP router, depending on the transport protocol.

Another problem with FTTC topology arises from the fact that the data stream multiplexing of RDSLAM involves protocols, e.g. ATM switching or IP routing. Protocol dependency may turn out to be a problem if the original protocol cannot support new services in the future. In that case, it may be necessary to modernize all the RDSLAM equipment, causing considerable expenses to the network operator, because the number of RDSLAM units is inherently high.

Publication US5526154 discloses a method of establishing a subscriber connection and a subscriber network. The method of US5526154 succeeds in overcoming some of the problems described above. According to the method of US5526154, the analog interface of the DSL modems at the central site DSLAM is connected to the system, so that the central site equipment converts the modem analog signal into a digital sample sequence. The sample sequence is transmitted through an optical fiber to the far end and converted back into an analog signal, which is then fed into a twisted pair subscriber cable. The same procedure is carried out as well in the reverse transmission direction from the subscriber towards the central site. Hence, the system is entirely symmetrical, and identical equipment is needed at both ends of the optical fiber. Thus the interface between the system and the central site DSL modems is based on connecting analog signals in both transmission directions. An inherent problem of this method arises from the fact that there are altogether four line transformers along the signal transmission path between the central site DSL modem and the subscriber network-terminating unit. As a consequence, there are two more transformers in addition to the transformers included in the DSL modem and the network-terminating unit. Line transformers play a significant role in many DSL modem types because they alter the signal transmission path transfer function. Hence, the additional line transformers hamper the functioning of the modem considerably and may even prevent the modem operation. In addition, the method of US5526154 requires cost adding electronics, including two additional analog-to-digital converters and two digital-to-analog converters for each subscriber connection. The method of US5526154 comprises automatic signal gain control based on the signal level measured by the equipment itself. In practice, this kind of signal level control is not workable, because the level adjustment has to be based on calculation carried out by the digital receiver of the DSL modem. The method of US5526154 does not enable this.

Publication WO 00/33489 discloses a multiservice, adaptable optical network unit (ONU) for use in a fiber-to-the-curb (FTTC) digital loop carrier system. The optical network unit includes a common card and a plurality of multi-media service cards that are connected to the common card by using a card-link interface. The card-link interface can be e.g. a serial-bus connection organized in a star configuration such that each service card is connected to the common card with a separate point-to-point card-link. The disclosed solution provides a scalable FTTC-system. Publication WO 00/33489 does not, however, provide solutions to problems related to DSL-modems located in optical network units of a FTTC-system.

Ho et al. ("Broadband Access Using Sub-carrier Multiplexing and Asymmetric Digital Subscriber Lines" IEEE 1998 Ho et al.) discloses a solution in which analog ADSL-signal is transferred via an optical link. At both ends of the optical link there are optoelectrical converters that convert an optical analog ADSL-signal into an electrical analog ADSL-signal and vice versa. Furthermore, the solution comprises mixers that are disposed to place the center frequencies of a plurality of analog ADSL-signals to desired frequencies in such a way that the plurality of analog ADSL-signals can be transferred in a frequency division manner in the same optical link. Optical transmitters and receivers for analog optical signals are significantly more expensive than optical transmitters for digital optical signals. This fact limits significantly the usability of the solution presented by Ho et a1.

The objective of the present invention is to overcome the problems of prior-art technology and to provide an entirely novel method for establishing an FTTC subscriber network.

### Summary of the invention

The objective of the invention is to forge a solution enabling the subscriber connection to be established and especially the equipment at the subscriber end of the optical fiber to be implemented in as simple a way as possible.

The objective is achieved by the method according to the invention, characterized by what is stated in the characterizing part of claim 1, and by the system according to the invention, characterized by what is stated in the characterizing part of claim 10.

In the method according to the invention, the DSL modems of subscriber connections are implemented in a distributed manner so that the equipment at the subscriber end of the optical fiber comprises only the analog parts of the modems and a multiplexer element, which adapts the analog-to-digital and digital-to-analog converters included in the analog parts to the optical fiber.

In a preferred embodiment of the invention, the control information required by the analog parts are determined by the digital transmitter and receiver elements of the modems located at the central site, and the said control information is transmitted to the modem analog parts via an auxiliary channel over the optical fiber. There are many prior-art techniques for implementing the auxiliary channel. As described later, the auxiliary channel is virtually necessary for the present, but it may become unnecessary in the future.

In another preferred embodiment of the invention, the clock signals required with the method can be implemented so that all clocks are mutually synchronous, enabling a simple implementation, but on the other hand, it is required that all DSL modems connected to the system have to be identical.

In a third preferred embodiment of the invention, the clock signals required with the method can be implemented so that the transmitter and receiver clock signals of different modems need not have identical frequencies or be mutually synchronous, nor synchronous with other clocks in the system either. As a consequence, implementation is more complicated compared with the above-mentioned embodiment, but on the other hand, its advantage is that different types of DSL modems can be installed in the system.

Thus, in the method according to the invention, the required clock signals can be implemented in two different ways depending on what is preferred, simple implementation or resiliency.

In a fourth preferred embodiment of the invention, the line hybrid included in the analog parts can he coupled to the twisted pair cable without a line transformer.

In a fifth preferred embodiment of the invention, a conventional analog telephone connection can be implemented in the system.

The invention offers several substantial advantages.

In FTTC topology, the electronics of RDSLAM equipment installed in the hard environment at the subscriber end of the optical fiber can be made substantially simpler compared to conventional DSLAM equipment, and it can be made entirely independent of protocols related to data stream multiplexing.

The invention also provides means to use different types of DSL techniques in the same system.

In addition, the invention makes it possible to implement over the same twisted pair cable both a high speed DSL connection and an analog telephone connection, without mutual interference.

In the following, the invention will be examined in greater detail with the help of exemplifying embodiments and the appended drawings.

## List of figures

FIG. 1 represents the structure of a prior-art FTTC subscriber network and the RDSLAM equipment residing at the subscriber end of an optical fiber.

FIG. 2 depicts a principle of the invention whereby the equipment at the subscriber end of the fiber comprises only the analog parts of a DSL modem and the multiplexer which adapts the analog-to-digital and digital-to-analog converters to the optical fiber.

FIG. 3 shows details of the method according to the invention concerning the DSL modem connection of one subscriber.

FIG. 4 illustrates a principle of clocking implementation in accordance with the invention, in a case where all DSL modems are using the same sampling frequency.

FIG. 5 illustrates a principle of the invention which makes it possible to connect different types of DSL modems to the system so that the digital transmitters and receivers of separate DSL modems are able to use varying sampling frequencies.

FIG. 6 describes a principle of the invention where the analog parts located at the subscriber end of the optical fiber include a controllable gain stage.

FIG. 7 illustrates a principle in accordance with the invention which enables the analog parts to be coupled to the twisted pair cable without a line transformer.

FIG. 8 represents a principle of the invention which makes it possible to connect an analog telephone connection to the twisted pair cable of each subscriber.

## Detailed description of the invention

The following abbreviations are used in this document:

| | |
|---|---|
| AD converter | analog-to-digital converter |
| AGC | automatic gain control |
| ATM | asynchronous transfer mode |
| COMUX | central office multiplexer |
| DA converter | digital-to-analog converter |
| DSL | digital subscriber line |
| DSLAM | digital subscriber line access multiplexer |
| FTTC | "Fiber To The Curb", " Fiber To The Cabinet", subscriber network comprising an optical fiber and a metallic cable |
| IP | internet protocol |
| POTS | "Plain Old Telephone Service", conventional telephone connection |
| RAFE | remote analog front end, analog parts residing at the far end |
| RDLAM | remote DSLAM of an FTTC network |

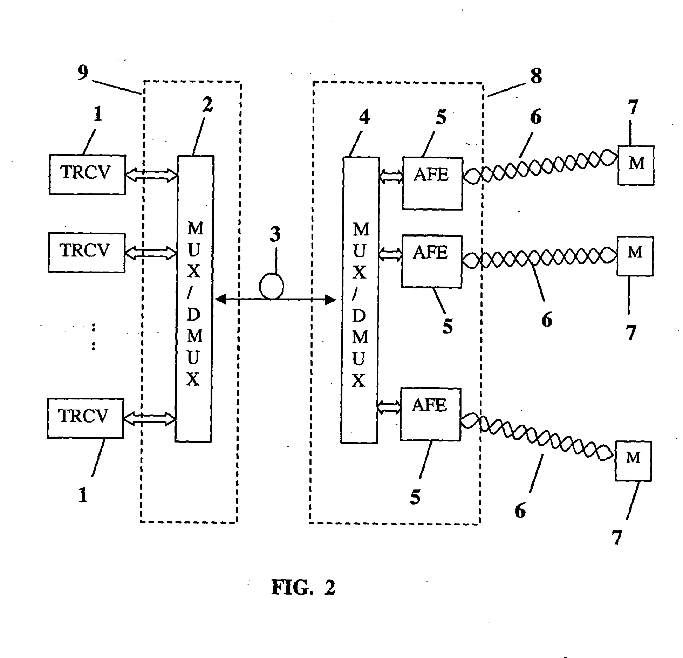

In the method according to the invention in FIG. **2,** the equipment **8** needed at the subscriber end of the optical fiber and located, for example, in a street corner cabinet, comprises only the analog parts **5** of the DSL modems, so that digital signal processing of the modems is carried out by a transceiver element **1** located at the central site. A full-duplex optical fiber link **3** connects the transceiver element to equipment **8** and carries digital sample sequences transferred between the digital transceiver and the analog parts in both directions. The traffic from all subscriber cables concentrated at the fiber end is multiplexed to the fiber link. The network terminal unit **7** of each subscriber is located at the far end of each twisted pair cable **6.** The said equipment **8** at the subscriber end of the fiber is subsequently referred to as RAFE (Remote Analog Front End).

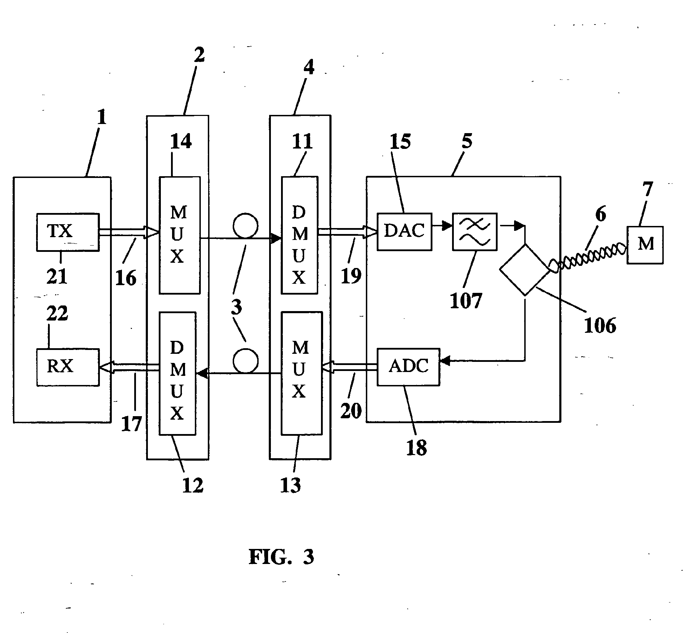

FIG. **3** illustrates details of the method. A DSL modem transmitter **21** at the central site generates a modulated signal **16** in digital form at a certain sampling frequency of $f_{CONV}$. Signal **16** is represented with a bit accuracy sufficient for the modulation method in use, typically with about 12 bits. Digital sample sequences produced by several DSL modem transmitters are multiplexed by a multiplexer clement **14** into a serial data stream with a sufficient bit rate. Multiplexing requires that a frame structure is added to the bit stream by the insertion of additional frame header bits. There are many ways to compose the frame structure, and the frame details are not essential for the operation of the method. In the following, it is assumed that N separate subscriber connections are transported over the single fiber link **3** and that the bit accuracy of the sample sequence produced by a transmitter is K bits. Furthermore, it is assumed that the number of bits in the frame header is M. With these symbols the bit rate of the multiplexed bit stream can be expressed as

$$f_{MUX} = (N + M/K) \, f_{CONV}$$

Subsequently, the multiplexer equipment **2,** including its optical fiber interface, is referred to as COMUX (Central Office Multiplexer).

The bit stream, multiplexed by the COMUX, is transported through the fiber link **3** to the RAFE. In the RAFE, the frame structure is disassembled and the bit stream corresponding to each subscriber is separated in a demultiplexer **11** and then converted into a sample sequence **19** of K bit width, with a sampling frequency of $f_{CONV}$. The sample sequence **19** is fed into a digital-to-analog converter **15** (DA conversion). The output signal of the converter is filtered by a low-pass filter **107,** which removes the folded spectral components of the signal. The signal is fed into the twisted pair cable **6** via a hybrid circuitry **106** furnished with a line transformer.

The signal produced by the network terminal unit **7** connected to the far end of twisted pair cable **6** is transferred through the transformer and hybrid **106** to an analog-to-digital converter **18** of the RAFE, which converts the signal into a digital sample sequence of sampling frequency $f_{CONV}$ (AD conversion).

In the receiving direction the sample sequences coming from all subscriber connections are multiplexed by a multiplexer element **13** into a serial framed bit stream. The bit rate of the bit stream is $f_{MUX}$, provided that the AD conversion bit accuracy is the same as the accuracy of DA conversion in the transmitting direction and that the frame header length is equal to the header length of the transmitting direction. The bit accuracies in both directions do not need to be equal but this assumption is nevertheless made subsequently.

In the receiving direction, the multiplexed bit stream is transferred over fiber link **3** to the central site. There the frame structure is disassembled by a demultiplexer element **12,** and sample sequences **17** corresponding to each subscriber connection are fed into the DSL modem receiver **22** of the respective subscriber connection.

*System clocks*

The signal is transferred as sample sequences between subscriber-specific DSL modem transmitters and receivers, AD and DA converters, and the multiplexing elements. Hence a clock signal is needed for synchronizing the signal transfer. Thus the generation of clock signals plays an essential role in the system implementation.

Provided that the constraints are set so that all DSL modems are operating at the same nominal clock frequency and all clocks are synchronized, the clocks can be implemented in the following preferred way.

All the clocks of the system are synchronized with each other. As a consequence, the frequency ratio between each clock is a precise fraction. The ratio between each clock frequency is dependent on the used bit precision, the sampling frequencies, and the details of the bit stream frame structure on the fiber link. But in any case, the frequency ratio is always a precise fraction.

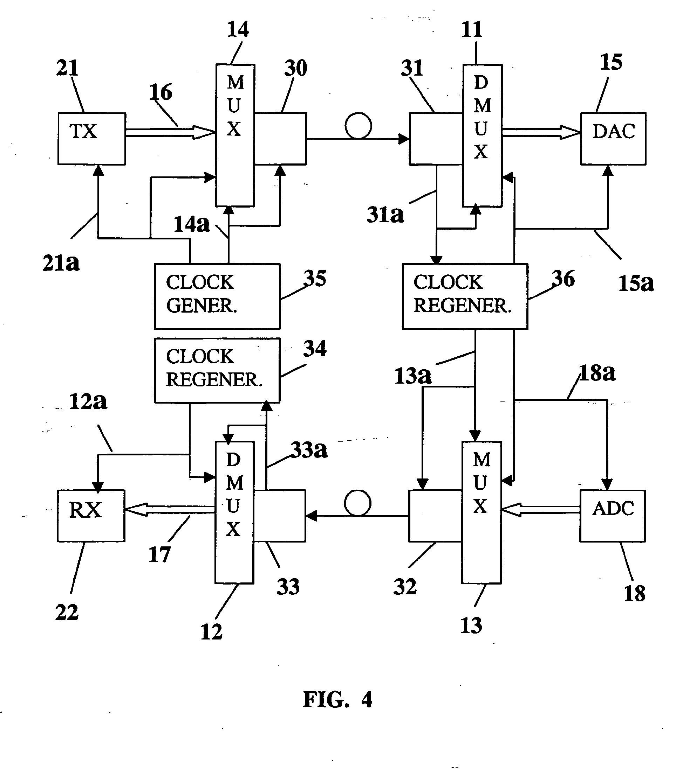

FIG. **4** illustrates detailed clocking implementation of the method in accordance with the invention. The frequency ratio of the multiplexed bit stream on the optical fiber link and the bit stream generated by a single DSL transmitter is a fixed ratio of two integers. A clock generator **35** included in the COMUX produces a sampling clock **21a** for a DSL transmitter **21**. The said clock **21a** synchronizes the signal samples that are produced by the DSL transmitter and fed into the multiplexer **14**. Hence it is essential that every DSL transmitter can synchronize itself to the clock provided by the COMUX. It is also necessary that every DSL modem uses the same sampling frequency. The clock generator **35** also generates a clock signal **14a** for the multiplexer **14** and a fiber link transmitter **30.** A fiber link receiver **31** regenerates a clock signal **31a** based on the signal received from the fiber and gives the said regenerated clock signal to the demultiplexer **11** and a clock regenerator **36**. The clock regenerator **36** produces clocks **13a, 15a,** and **18a,** which are synchronized to clock **31a**. The multiplexer **13** and a fiber link transmitter **32** are using clock **13a**. Clock **15a** is used by DA converter **15** as a sampling clock and by demultiplexer **11** for synchronizing the sample sequence it feeds into the DA converter. Clock **18a** is used by AD converter **18** as a sampling clock which also synchronizes the converted digital signal for feeding into the multiplexer **13**. The multiplexer **13** receives samples synchronized by the clock **18a**. Based on the signal received from the fiber, the fiber link receiver **33** regenerates a clock **33a,** which is given to a demultiplexer **12** and a clock regenerator **34.** The said clock regenerator **34** produces a clock **12a,** synchronized to clock **33a**. The said clock **12a** is used by the demultiplexer **12** for synchronizing the sample sequence it gives to the receiver **22** of the COMUX. Accordingly, the clock generator **35** of the COMUX is the source of every clock included in the system. Generating the clocks in accordance with the above techniques is simple. But on the other hand, certain demands are made considering to the DSL modems installed in the system.

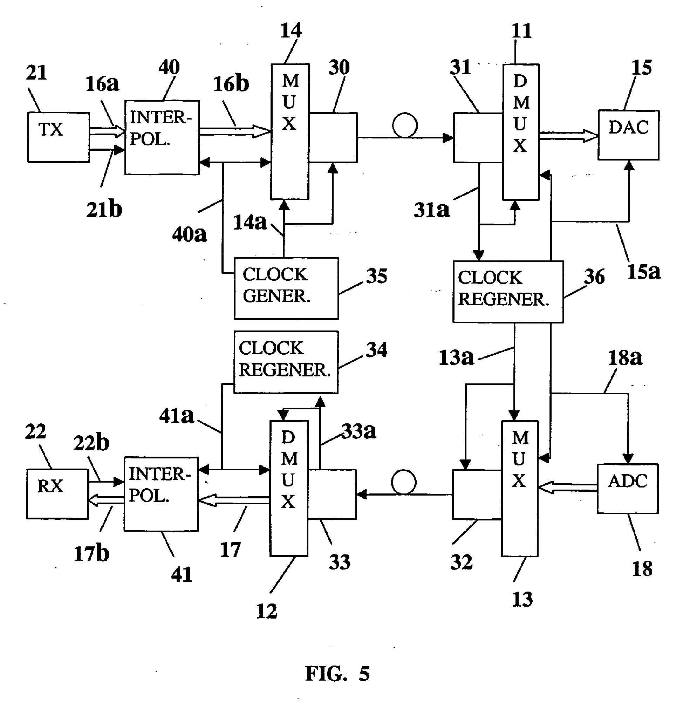

The clocking principle described in FIG. **4** presumes that the sampling frequency of every DSL transmitter and receiver is equal and that the clocks are synchronized. As a consequence, it is not possible to install different types of DSL equipment with different sampling frequencies in the system. FIG. **5** represents another preferred embodiment of the invention, which makes it possible for DSL transmitters and receivers to be connected to the system using sampling clocks generated by the transmitters and receivers themselves. The frequency of these clocks need not have a fixed ratio with the COMUX clocks.

FIG. **5** shows a digital interpolator element **40** connected between a DSL transmitter **21** and a multiplexer **14**. The said interpolator element is based on digital filtering and converts the sample sequence **16a** produced by the DSL transmitter in synchronism with a clock **21b,** which is generated by the DSL transmitter as well, into another sample sequence **16b,** which is synchronized to a clock **40a** given by the clock generator **35.** In the receiving direction, an interpolator element **40** converts the sample sequence **17** coming from the demultiplexer **12** and synchronized to clock **41a** into another sample sequence **17b,** which is synchronized to a clock **22b** generated by the DSL receiver **22.** There are many alternate techniques for implementing the interpolator elements **40** and **41** (e.g. Heinrich Meyer, Marc Moenelaey, Stefan A. Fechtel, Digital Communication Receivers, John Wiley & Sons, Inc). Interpolator implementation is not essential for the operation of the system. In other respects the clocking arrangement remains the same as in FIG. **4.**

The method in FIG. **5** makes it possible to install DSL modems of different types in the system, provided that the analog-to-digital and digital-to-analog conversions are running at a sufficiently high sampling frequency with respect to each DSL modem. The method also makes it possible for several service providers to connect their own DSL equipment to the system. In addition, this enables the encompassing of FTTC subscriber connections for competition between several service providers, which is also the objective of legislation in many countries.

*Automatic gain control and transfer of control information for analog parts*

The systems depicted in FIG. **2 - 5** can utilize an analog-to-digital converter **18** with such high precision that the twisted pair cable is allowed to attenuate the signal considerably. In that case the signal, transmitted by network terminal unit **7** and attenuated by cable **6,** can be converted into digital form so that the quantization noise of the converter does not cause too much interference in signal detection in the receiver **22.** The required bit accuracy of the converter is greatly dependent on the modulation method used by the modem and on the maximum allowable attenuation of the cable. Hence, very high converter precision may be required, and it is evident that the state-of-the-art converter technology does not provide sufficient precision at the cost level required by volume production. An example of this is the analog-to-digital converter of a VDSL modem, where the required bit accuracy is about 16 bits if the converter is not equipped with AGC (Automatic gain Control) circuitry controlled by the receiver. The AGC circuitry, based on an analog amplifier in front of the analog-to-digital converter, amplifies the signal in the input of the converter so that the converter converts a signal at a level as high as possible. Hence, converter precision is utilized maximally regardless of the length of the cable **6.** In the VDSL modem case, cited as an example, sufficient converter accuracy is around 12-13 bits if the receiver is equipped with an AGC circuitry. In that case, the realization of the converter is notably easier, the manufacturing cost lower, and the converter power consumption lower. As the AD converter technology improves and the bit accuracies become higher, it may eventually be unnecessary to utilize a controlled AGC circuitry, even in the VDSL case cited as an example.

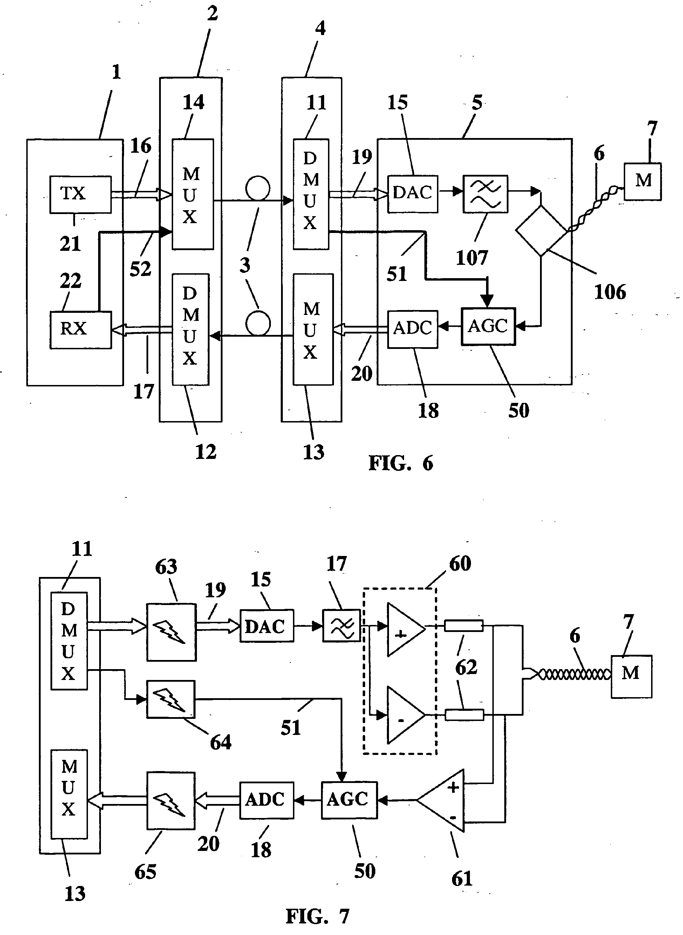

It is necessary that the AGC circuitry is controlled by the DSL receiver **22** residing at the central site, because what is the proper gain is not known in advance. Except for very simple modulation methods or line codes (e.g. HDB3 line code), which do not require a special start-up or handshaking phase, the gain cannot be controlled on the basis of the signal level measured in the RAFE either, because the training phase comprises periods when the gain must definitely be constant. In a preferred embodiment of the invention, an auxiliary channel is implemented over the fiber link in order to enable each DSL receiver to control the AGC circuitry of the analog parts **5** belonging to the corresponding subscriber connection. There are many ways to implement the auxiliary channel, e.g. by utilizing a wavelength multiplexing on the fiber link, and the implementation principle is not essential for the operation of the method according to the invention. In a preferred embodiment of the invention, the auxiliary control channel is implemented by inserting control channel bits for each subscriber connection in the frame structure. FIG. **6** illustrates the details of this preferred embodiment. As already mentioned above, improvements, especially in AD conversion technology, may make it possible to manage without control information being sent to the analog parts of the modem. In that case no auxiliary channel is needed over the fiber link.

In FIG. **6** the receiver **22** transmits the control data for an AGC circuitry **50** through a digital interface **52** to the multiplexer **14.** The multiplexer inserts the level adjustment data bits into the frame structure of the data stream transported over the fiber link **3.** The demultiplexer **11** picks up the level adjustment data **51** for each subscriber connection from the frame structure and hands them over to the AGC circuitry **50.**

In the method according to the invention, the digital transmitter and receiver at the central site may also utilize the auxiliary channel for controlling other functions of the analog parts. For example, the output signal of the digital-to-analog converter can be looped directly to the input of the analog-to-digital converter (local loop). Thus, it is possible to test the operation of the converters from the central site during the installation of the equipment.

*Removing the line transformer*

In FIG. **3** and **6** the hybrid element **106** is shown comprising a line transformer which conveys the transmitter signal into pair cable **6** and which also conveys the received signal from the pair cable to the AD converter or potential AGC circuitry. The main task of the line transformer is to provide over-voltage protection in order to protect the analog parts from high voltage pulses, e.g. induced by lightning strokes. Another task of the transformer is to attenuate longitudinal noise voltage induced in the cable. In addition to the above-mentioned tasks, the line transformer is an integral part of the signal path influencing the signal transfer function. For example, in an echo canceling DSL modem, in conjunction with the line driver feeder resistance and the pair cable impedance, the line transformer forms a high-pass filter, which has a substantial effect on the temporal length of the echo response reflected from the hybrid. Hence, selection of the magnitude for the main inductance of the line transformer is crucial for an echo canceling modem. Another example of the importance of line transformer inductance is an ADSL modem, where a proper inductance magnitude is chosen in order to have an advantageous influence on signal transfer function and channel equalization.

Because the magnitude of the line transformer main inductance greatly depends on the type of DSL modem is use, the inductance dependency constitutes a substantial drawback for the method of the present invention. The fact that the optimal transformer is dependent on the type of DSL modem considerably decreases universal applicability of the method.

FIG. **7** illustrates a preferred embodiment of the line hybrid of a RAFE where no line transformer is needed. Pair cable **6** is coupled directly to the differential output of a line driver **60** without any line transformer. The signal, received from the network terminal unit **7,** is connected to a differential amplifier **61.** The differential amplifier efficiently attenuates the common mode noise signal. The effect of a line transformer on the signal transfer function is imitated by means of digital filtering, both by the transmitter and the receiver at the central cite (transmitter **21** and receiver **22** for example in FIG. **6).** The digital filtering can be adapted to be optimal for the DSL modem in use. An alternative site for the line transformer imitating digital filtering is the multiplexer **14** and demultiplexer **12** of the COMUX. Another alternate site for digital filtering is the demultiplexer **11** and multiplexer **13** of the RAFE. In so far as the digital filtering takes place in the RAFE and DSL modems of different types are installed in the system, the digital filtering must be programmable over the fiber link via an auxiliary channel. In this way, the problem arising from a fixed line transformer inductance and different installed modem types is effectively resolved.

The whole line interface circuitry is protected from over-voltage by isolating it galvanically from other circuitry by means of over-voltage insulators **63, 64,** and **65.** These insulators isolate signals **19** and **51** coupled to the DA converter and AGC circuitry from the demultiplexer **11,** and the output signal **20** of the AD converter from the multiplexer **13.** There are many alternate means of implementing these over-voltage insulators, and the implementation details are not essential for the operation of the method. The insulation might be based on inductive or capacitive signal coupling or an opto-isolator. The power feed over the insulating boundary for the isolated electronics has to be arranged through inductive coupling by a transformer of a switched-mode power supply.

*Connecting a telephone service to the system*

According to prior-art technology, a conventional subscriber connection or a POTS connection (Plain Old Telephone Service) can be connected to the same pair cable with a DSL modem in so far as such line code or modulation method is applied by the modem that the frequency ranges of the telephone signal (about 100 - 3000 Hz) and the DSL modem signal do not overlap. An example is an ADSL modem which can be connected to the same pair cable with a telephone set by means of a so-called splitter filter that separates the telephone and modem signals.

A POTS can be connected to a system according to the present invention in the following way. In the central site COMUX, the telephone signal is converted into a digital sample sequence with the same sampling frequency that the DSL transmitter **21** uses when feeding its own output signal to the multiplexer **14.** The sampled telephone signal is added together with the DSL transmitter output signal **16.** The said phone signal is converted into analog form by the DA converter **15** of the RAFE. In this case the transformless analog parts of FIG. **7** should be applied, because the line transformer inductance of a DSL modem is far too low for the telephone signal and would practically short-circuit the telephone signal.

In the reverse direction, it would be possible to use the AD converter **18** of the RAFE for converting the telephone signal and then filter apart the said signal after demultiplexing **12** in the COMUX. In practice, problems would arise because a very high-level telephone signal might overload the AD converter **18** so that the DSL modem signal would be distorted and bit error bursts would occur as a consequence. The telephone signal also increases the dynamic range of the AD converter input signal. Hence, the bit accuracy of the AD converter should be added, which would increase power consumption and component costs.

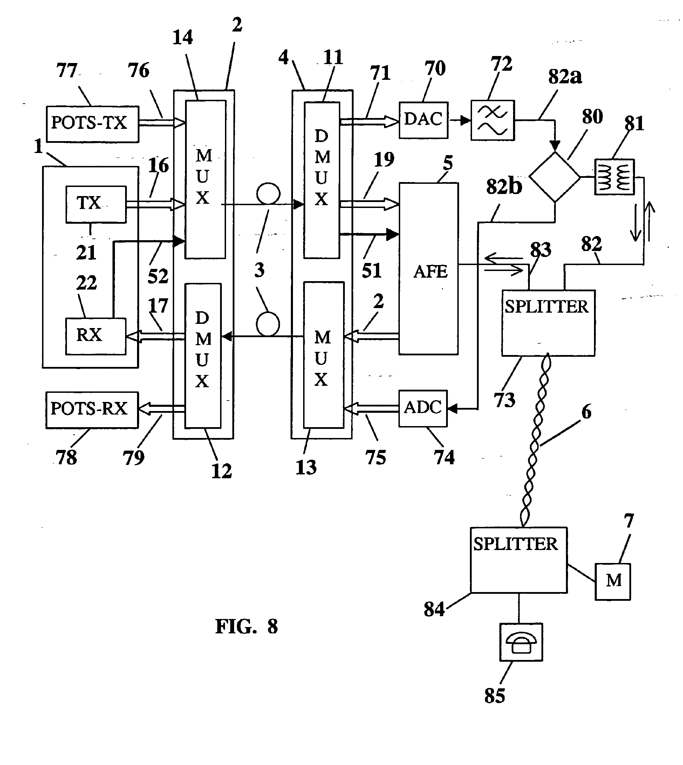

The problems described above can be overcome by applying the method depicted in FIG. **8.** The method is based on transferring the telephone signal over the optical fiber in a digital sampled form by using a subscriber-specific auxiliary channel and separate AD and DA converters for converting the telephone signal. The auxiliary channel can be implemented by various means, e.g. by utilizing wavelength multiplexing on the optical fiber. A preferred embodiment of the auxiliary channel, as shown in FIG. **8,** exploits the frame structure used over the fiber link by multiplexing the said sampled telephone signal and inserting the multiplexed stream into the frame structure.

In the embodiment shown in FIG. **8,** a standard compliant subscriber-specific telephone signal (e.g. in analog form or in accordance with the recommendation G.704), coming from a telephone exchange, is converted into a digital sample sequence **76** at an appropriate sampling frequency in a functional block **77**. The said sample sequence is multiplexed **(14)** into the frame transferred over the fiber link so that the demultiplexer **11** of the RAFE can pick up the subscriber-specific telephone channel bits for each subscriber and feed them in a form of digital sample sequence **71** to a digital-to-analog converter **70.** A low-pass filter **72** filters the output signal of the said converter, and the filtered signal is fed into a line transformer **81** through a two-wire/four-wire hybrid **80**. The analog parts of the DSL modem, equipped with a transformer (according to FIGS. **3** and **6)** or without a transformer (according to FIG. **7),** are included in the AFE block **5** (Analog Front End). A splitter filter **73,** consisting of passive components, mixes the DSL modem signal **83** and the telephone signal **82** and feeds the mixed signal into the pair cable **6**. From the signal coming from the far end of the pair cable, the said splitter filter filters apart the telephone signal **82,** concentrated at lower frequencies, and the modem signal **83,** concentrated at higher frequencies. The telephone signal is fed to an analog-to-digital converter **74** through the hybrid **80,** and the modem signal **83** is coupled to the AFE block 5. The said AD converter **74** produces a sample sequence **75,** which is fed into the multiplexer **13** that multiplexes the telephone channel bits into the frame transferred over the fiber link. The demultiplexer **12** of the central site COMUX picks up subscriber-specific telephone channel bits from the frame. A functional block **78** converts the telephone channel sample sequence into such a form that the signal can be fed into a telephone exchange. At the subscriber end of the pair cable, a splitter filter **84** is needed for filtering apart the signals of network terminal 7 and a telephone set **85**. The filtering arrangement at the subscriber end and the splitter filter **73** are known technology, as utilized in ADSL modem connections, for example.

In the system in accordance to the method described above, the inductance and other properties of the line transformer conveying the telephone signal can be chosen to be optimal for the telephone signal, and this transformer has no deteriorating influence on the DSL modem signal.

Although the above description of the invention refers to the examples in the accompanying drawings, it is apparent to an expert in the field that the invention is not limited by the examples but that various modifications are possible within the scope of the invention claimed. For example, the fiber link may comprise several full-duplex fibers or there may be separate fibers for both transmission directions.

**Claims**

1. A method for establishing a digital subscriber connection between a central site and a network terminating unit (7) of a subscriber, the method comprising:

   - transferring through an optical fiber (3) a first digital modulated signal from the central site to an equipment (8),
   - producing in the equipment a first analog modulated signal by converting said first digital modulated signal into analog form,
   - transferring through a pair cable (6) said first analog modulated signal from the equipment to the network terminating unit,
   - generating in the network terminating unit a second analog modulated signal,
   - transferring through the pair cable said second analog modulated signal from the network terminating unit to the equipment,
   - producing in the equipment a second digital modulated signal by converting said second analog modulated signal into digital form , and
   - transferring through the optical fiber said second digital modulated signal from the equipment to the central site,

   **characterized in that** in the method:

   - a digital transceiver element (1) of a digital subscriber line modem, hereinafter said DSL-modem, is used in the central site for generating said first digital modulated signal,
   - analog parts (5) of said DSL-modem are used in the equipment for the production of said first analog modulated signal and for the production of said second digital modulated signal, and
   - the digital transceiver element of said DSL-modem is used in the central site for demodulating said second digital modulated signal.

2. A method according to claim 1, **characterized in that** in the method:

   - said first digital modulated signal is multiplexed with a third digital modulated signal in the central site, said third digital modulated signal being generated with a digital transceiver element (1) of another DSL-modem,
   - said first digital modulated signal and said third digital modulated signal are transferred through the optical fiber (3) from the central site to the equipment (8) as a first multiplexed signal,
   - said first digital modulated signal and said third digital modulated signal are de-multiplexed in the equipment from said first multiplexed signal,
   - a third analog modulated signal is produced in the equipment by converting said third digital modulated signal into analog form with analog parts (5) of said other DSL-modem,

- said third analog modulated signal is transferred through another pair cable (6) from the equipment to another network terminating unit (7),

- a fourth analog modulated signal is generated in the other network terminating unit (7),

- said fourth analog modulated signal is transferred through the other pair cable (6) from the other network terminating unit (7) to the equipment (8),

- a fourth digital modulated signal is produced in the equipment (8) by converting said fourth analog modulated signal into digital form with the analog parts (5) of said other DSL-modem,

- said fourth digital modulated signal is multiplexed in the equipment with said second digital modulated signal,

- said second digital modulated signal and said fourth digital modulated signal are transferred through the optical fiber (3) from the equipment to the central site as a second multiplexed signal,

- said second digital modulated signal and said fourth digital modulated signal are de-multiplexed in the central site from said second multiplexed signal, and

- said fourth digital modulated signal is demodulated in the central site with the digital transceiver element (1) of said other DSL-modem.

3. A method according to claim **1, characterized in that** control information for the analog parts (5) of said DSL-modem is determined in the digital transceiver elements (1) of said DSL-modem, and said control information is transferred through the optical fiber from the central site to the equipment using an auxiliary channel arranged over the optical fiber.

4. A method according to claim 1, **characterized in that** the analog parts (5) of said DSL-modem comprise a digital-to-analog converter (15), an analog-to-digital converter (18), a line driver, and a line hybrid, said first digital modulated signal being an input signal of the digital-to-analog converter and an output signal of the analog-to-digital converter being said second digital modulated signal.

5. A method according to claim 4, **characterized in that** in the method:

    - a first clock generator (35) is used for producing sampling clock signals for a transmitter part of the digital transceiver element (1) of said DSL-modem and for an optical fiber transmitter of the central site,

    - a first clock regenerator (34) is used for producing a sampling clock signal for a receiver part of the digital transceiver element (1) of said DSL-modem, the first clock regenerator (34) being controlled with a clock signal regenerated by an optical fiber receiver (33) of the central site, and

    - a second clock regenerator (36) is used for producing sampling clock signals for the digital-to-analog converter, for the analog-to-digital converter, and for an optical fiber transmitter (32) of the equipment (8), the second clock regenerator (34) being controlled with a clock signal regenerated by an optical fiber receiver of the equipment (8).

6. A method according to claim 2, **characterized in that** sampling phases of said first digital modulated signal and said third digital modulated signal are synchronized with respect to each other by using mutually synchronous sampling clock signals for said first digital modulated signal and for said third digital modulated signal, and sampling phases of said second digital modulated signal and said fourth digital modulated signal are synchronized with respect to each other by using mutually synchronous sampling clock signals for said second digital modulated signal and said fourth digital modulated signal.

7. A method according to claim 2, **characterized in that** a sampling phase of said third digital modulated signal is synchronized with a sampling phase of said first digital modulated signal by interpolating new sample values for said third digital modulated signal, and a sampling phase of said fourth digital modulated signal is synchronized with a sampling phase of said second digital modulated signal by interpolating new sample values for said fourth digital modulated signal.

8. A method according to claim 4, **characterized in that** in the method:

    - over-voltage isolators (63, 64, 65) are used for isolating the analog-to-digital converter and the digital-to-analog converter galvanically from multiplexing elements (11, 13) of the equipment (8),

    - an output of the digital-to-analog converter is coupled to a differential line driver (60),

    - non-inverting and inverting outputs of the differential line driver are coupled galvanically to the pair cable (6) through feed resistors (62),

    - the pair cable (6) is coupled galvanically to an input of a differential amplifier (61), and

    - an output of the differential amplifier is coupled to the analog-to-digital converter.

9. A method according to claim 1, **characterized in**

**that** the method comprises:

- in the central site, converting a first standard compliant telephone signal of the subscriber into a first digital sample sequence (76),
- transferring the first digital sample sequence through the optical fiber by means of a subscriber-specific auxiliary channel from the central site to the equipment (8),
- in the equipment (8), producing a first analog telephone signal by converting the first digital sample sequence into analog form,
- in the equipment (8), coupling the first analog telephone signal to the pair cable (6) through a hybrid (80), a transformer, and a splitter filter (73),
- in the equipment (8), separating said second analog modulated signal and a second analog telephone signal of the subscriber from each other with the splitter filter (73),
- in the equipment (8), coupling said second analog modulated signal from the splitter filter to the analog parts (5) of said DSL-modem,
- in the equipment (8), producing a second digital sample sequence by converting the second analog telephone signal into digital form,
- transferring the second digital sample sequence through the optical fiber by means of a subscriber-specific auxiliary channel from the equipment (8) to the central site, and
- in the central site, converting the second digital sample sequence into a second standard compliant telephone signal of the subscriber.

10. A system for establishing a digital subscriber connection between a central site and a network terminating unit (7) of a subscriber, the system comprising:

- an optical fiber (3) between the central site and an equipment (8),
- a pair cable (6) between the equipment (8) and the network terminating unit (7), the equipment being capable of transmitting a first analog modulated signal to the pair cable and receiving a second analog modulated signal from the pair cable,
- in the central site, an optical fiber transmitter capable of transmitting a first digital modulated signal to the optical fiber (3),
- in the central site, an optical fiber receiver capable of receiving a second digital modulated signal from the optical fiber (3),
- in the equipment (8), an optical fiber transmitter capable of transmitting said second digital modulated signal to the optical fiber (3), and
- in the equipment (8), an optical fiber receiver capable of receiving said first digital modulated signal from the optical fiber (3),

**characterized in that** in the system further comprises:

- in the central site, a digital transceiver element (1) of a digital subscriber line modem, hereinafter said DSL-modem, arranged to generate said first digital modulated signal and to demodulate said second digital modulated signal, and
- in the equipment (8), analog parts (5) of said DSL-modem arranged to produce said first analog modulated signal by converting said first digital modulated signal into analog form and to produce said second digital modulated signal by converting said second analog modulated signal into digital form.

11. A system according to claim 10, **characterized in that** the system comprises:

- another network terminating unit (7),
- another pair cable (6) between the equipment (8) and the other network terminating unit (7),
- in the central site, a digital transceiver element (1) of another DSL-modem arranged to generate a third digital modulated signal and to demodulate a fourth digital modulated signal,
- in the central site, a multiplexer arranged to produce a first digital multiplexed signal by multiplexing said first digital modulated signal and said third digital modulated signal, the optical fiber transmitter of the central site being arranged to transmit said first digital multiplexed signal to the optical fiber (3),
- in the central site, a de-multiplexer arranged to separate said second digital modulated signal and said fourth digital modulated signal from a second digital multiplexed signal, the optical fiber receiver of the central site being arranged to receive said second digital multiplexed signal from the optical fiber (3),
- in the equipment (8), a de-multiplexer arranged to separate said first digital modulated signal and said third digital modulated signal from said first digital multiplexed signal, the optical fiber receiver of the equipment being arranged to receive said first digital multiplexed signal from the optical fiber (3),
- in the equipment (8), analog parts (5) of said other DSL-modem arranged to produce a third analog modulated signal by converting said third digital modulated signal into analog form, to transmit said third analog modulated signal to the other pair cable (6), to receive a fourth analog modulated signal from the other pair cable (6), and to produce said fourth digital modulated signal by converting said fourth analog modulated signal into digital form,
- in the equipment (8), a multiplexer arranged to produce said second digital multiplexed signal by multiplexing said second digital modulated signal and said fourth digital modulated signal, the optical fiber transmitter of the equipment being arranged to transmit said second digital multiplexed signal to the optical fiber (3),

12. A system according to claim 10, **characterized in that** the digital transceiver element (1) of said DSL-modem comprise means for determining control information needed by the analog parts (5) of said DSL-modem, and the optical fiber transmitter of the central site and the optical fiber receiver of the equipment are arranged to provide at least one auxiliary channel over the optical fiber (3) for transferring the control information from the digital transceiver element (1) of said DSL modem to the analog parts (5) of said DSL-modem.

13. A system according to claim 10, **characterized in that** the analog parts (5) of said DSL-modem comprise an analog-to-digital converter, a digital-to-analog converter, a line driver, and a line hybrid.

14. A system according to claim 13, **characterized in that** the system comprises:

    - a first clock generator (35) arranged to generate a sampling clock signal for a transmitter part of the digital transceiver element (1) of said DSL-modem and a sampling clock signal for the optical fiber transmitter (30) of the central site,
    - a first regenerator element (34) arranged to generate, based on a clock signal regenerated by the optical fiber receiver (33) of the central site, a sampling clock signal for a receiver part of the digital transceiver element (1) of said DSL-modem,
    - a second regenerator element (36) is adapted to generate, based on a clock signal regenerated by the optical fiber receiver of the equipment (8), sampling clock signals for the digital-to-analog converter, for the analog-to-digital converter, and for the optical fiber transmitter of the equipment (8).

15. A system according to claim **11, characterized in that** the digital transceiver element (1) of said DSL-modem and the digital transceiver element (1) of said other DSL-modem are arranged to synchronize sampling phases of said first digital modulated signal and said third digital modulated signal with each other by using mutually synchronous sampling clock signals for said first digital modulated signal and said third digital modulated signal, and the digital transceiver element (1) of said DSL-modem and the digital transceiver element (1) of said other DSL-modem are arranged to synchronize sampling phases of said second digital modulated signal and said fourth digital modulated signal with each other by using mutually synchronous sampling clock signals for said second digital modulated signal and said fourth digital modulated signal.

16. A system according to claim 11, **characterized in that** the system comprises a first interpolator element (40) arranged to synchronize a sampling phase of said third digital modulated signal with a sampling phase of said first digital modulated signal by interpolating new sample values for said third digital modulated signal, and a second interpolator element (41) arranged to synchronize a sampling phase of said fourth digital modulated signal with a sampling phase of said second digital modulated signal by interpolating new sample values for said fourth digital modulated signal.

17. A system according to claim 13, **characterized in that** the system comprises:

    - over-voltage isolators (63, 64, 65) arranged to isolate the analog-to-digital converter and the digital-to-analog converter galvanically from multiplexing elements (11, 13) of the equipment (8),
    - a differential line driver (60) coupled to an output of the digital-to-analog converter,
    - feed resistors (62) coupled galvanically to non-inverting and inverting outputs of the differential line driver and to the pair cable (6),
    - a differential amplifier (61) an input of which is coupled galvanically to the pair cable (6) and an output of which is coupled to the analog-to-digital converter.

18. A system according to claim 10, **characterized in that** the optical fiber transmitter of the central site and the optical fiber receiver of the equipment (8) are arranged to transfer a first digital sample sequence (76) from the central site to the equipment (8) through the optical fiber via a first subscriber-specific auxiliary channel, the optical fiber transmitter of the equipment (8) and the optical fiber receiver of the central site are arranged to transfer a second digital sample sequence (79) from the equipment (8) to the central site through the optical fiber via a second subscriber-specific auxiliary channel, and the system comprises:

    - in the central site, a first converter element (77) arranged to convert a first standard compliant telephone signal of the subscriber into the first digital sample sequence,
    - in the equipment (8), a digital-to-analog converter (70) arranged to produce a first analog telephone signal by converting the first digital sample sequence into analog form,
- in the equipment (8), a analog-to-digital converter (74) arranged to produce the second digital sample sequence by converting a second analog telephone signal into digital form,
- in the equipment (8), a hybrid (80), a transformer (81), and a splitter filter (73) arranged to conduct the first analog telephone signal from an output of the digital-to-analog converter (70) to the pair cable (6) and to conduct the second analog telephone signal from the pair cable (6) to an input of the analog-to-digital converter (74), the splitter filter (74) being also arranged to conduct said second analog modulated signal from the pair cable (6) to the analog parts (5) of said DSL modem and to conduct said first analog modulated signal from the analog parts (5) of said DSL-modem to the pair cable (6), and
- in the central site, a second converter element (78) arranged to convert the second digital sample sequence into a second standard compliant telephone signal of the subscriber.

**Patentansprüche**

1. Verfahren zur Herstellung eines digitalen Teilnehmeranschlusses zwischen einer Zentralstelle und einer Netzabschlusseinheit (7) eines Teilnehmers, aufweisend:

   - Übertragung eines ersten digitalen modulierten Signals durch eine Lichtfaser (3) von der Zentralstelle zu einer Einrichtung (8),
   - Produzierung eines ersten analogen modulierten Signals in der Einrichtung, indem das besagte erste digitale modulierte Signal in die analoge Form umgesetzt wird,
   - Übertragung des besagten ersten analogen modulierten Signals durch ein paarverseiltes Kabel (6) von der Einrichtung zur Netzabschlusseinheit,
   - Erzeugung eines zweiten analogen modulierten Signals in der Netzabschlusseinheit,
   - Übertragung des besagten zweiten analogen modulierten Signals durch das paarverseilte Kabel von der Netzabschlusseinheit zur Einrichtung,
   - Produzierung eines zweiten digitalen modulierten Signals in der Einrichtung, indem das besagte zweite analoge modulierte Signal in die digitale Form umgesetzt wird und
   - Übertragung des besagten zweiten digitalen modulierten Signals durch die Lichtfaser von der Einrichtung zur Zentralstelle,

   **dadurch gekennzeichnet , dass** beim Verfahren:

   - ein digitales Sender-Empfänger-Element (1) eines digitalen Teilnehmeranschlussleitungsmodems, im Folgenden DSL-Modems, in der Zentralstelle zur Erzeugung des besagten ersten digitalen modulierten Signals verwendet wird,
   - analoge Teile (5) des besagten DSL-Modems in der Einrichtung zur Produzierung des besagten ersten analogen modulierten Signals und zur Produzierung des besagten zweiten digitalen modulierten Signals verwendet werden und
   - das digitale Sender-Empfänger-Element des besagten DSL-Modems in der Zentralstelle zur Demodulierung des besagten zweiten digitalen modulierten Signals verwendet wird.

2. Verfahren nach Anspruch 1, **dadurch gekennzeichnet, dass** beim Verfahren:

   - das besagte erste digitale modulierte Signal mit einem dritten digitalen modulierten Signal in der Zentralstelle gemultiplext wird, wobei das besagte dritte digitale modulierte Signal mit einem digitalen Sender-Empfänger-Element (1) eines anderen DSL-Modems erzeugt wird,
   - das besagte erste digitale modulierte Signal und das besagte dritte digitale modulierte Signal durch die Lichtfaser (3) von der Zentralstelle zur Einrichtung (8) als erstes gemultiplextes Signal übertragen werden,
   - das besagte erste digitale modulierte Signal und das besagte dritte digitale modulierte Signal in der Einrichtung aus dem besagten ersten gemultiplexten Signal demultiplext werden,
   - ein drittes analoges moduliertes Signal in der Einrichtung produziert wird, indem das besagte dritte digitale modulierte Signal mit analogen Teilen (5) des besagten anderen DSL-Modems in die analoge Form umgesetzt wird,
   - das besagte dritte analoge modulierte Signal durch ein anderes paarverseiltes Kabel (6) von der Einrichtung zu einer anderen Netzabschlusseinheit (7) übertragen wird,
   - ein viertes analoges moduliertes Signal in der anderen Netzabschlusseinheit (7) erzeugt wird,
   - das besagte vierte analoge modulierte Signal durch das andere paarverseilte Kabel (6) von der anderen Netzabschlusseinheit (7) zur Einrichtung (8) übertragen wird,
   - ein viertes digitales moduliertes Signal in der Einrichtung (8) produziert wird, indem das besagte vierte analoge modulierte Signal mit den analogen Teilen (5) des besagten anderen DSL-Modems in die digitale Form umgesetzt wird,
   - das besagte vierte digitale modulierte Signal in der Einrichtung mit dem besagten zweiten digitalen modulierten Signal gemultiplext wird,
- das besagte zweite digitale modulierte Signal und das besagte vierte digitale modulierte Signal durch die Lichtfaser (3) von der Einrichtung zur Zentralstelle als zweites gemultiplextes Signal übertragen werden,
- das besagte zweite digitale modulierte Signal und das besagte vierte digitale modulierte Signal in der Zentralstelle aus dem besagten zweiten gemultiplexten Signal demultiplext werden und
- das besagte vierte digitale modulierte Signal in der Zentralstelle mit dem digitalen Sender-Empfänger-Element (1) des besagten anderen DSL-Modems demoduliert wird.

3. Verfahren nach Anspruch 1, **dadurch gekennzeichnet, dass** Steuerinformation für die analogen Teile (5) des besagten DSL-Modems in den digitalen Sender-Empfänger-Elementen (1) des besagten DSL-Modems bestimmt wird und die besagte Steuerinformation durch die Lichtfaser von der Zentralstelle zur Einrichtung übertragen wird, indem ein über der Lichtfaser angeordneter Hilfskanal verwendet wird.

4. Verfahren nach Anspruch 1, **dadurch gekennzeichnet, dass** die analogen Teile (5) des besagten DSL-Modems einen Digital-analog-Wandler (15), einen Analog-digital-Wandler (18), einen Leitungstreiber und eine Leitungshybride aufweisen, wobei das besagte erste digitale modulierte Signal ein Eingangssignal des Digital-analog-Wandlers ist und ein Ausgangssignal des Analog-digital-Wandlers das besagte zweite digitale modulierte Signal ist.

5. Verfahren nach Anspruch 4, **dadurch gekennzeichnet, dass** beim Verfahren:

   - ein erster Taktgenerator (35) verwendet wird, um Abtasttaktsignale für einen Senderteil des digitalen Sender-Empfänger-Elements (1) des besagten DSL-Modems und für einen Lichtfasersender der Zentralstelle zu produzieren,
   - ein erster Taktregenerator (34) verwendet wird, um ein Abtasttaktsignal für einen Empfängerteil des digitalen Sender-Empfänger-Elements (1) des besagten DSL-Modems zu produzieren, wobei der erste Taktregenerator (34) mit einem von einem Lichtfaserempfänger (33) der Zentralstelle regenerierten Taktsignal gesteuert wird und
   - ein zweiter Taktregenerator (36) verwendet wird, um Abtasttaktsignale für den Digital-analog-Wandler, für den Analog-digital-Wandler und für einen Lichtfasersender (32) der Einrichtung (8) zu produzieren, wobei der zweite Taktregenerator (34) mit einem von einem Lichtfaserempfänger der Einrichtung (8) regenerierten Taktsignal gesteuert wird.

6. Verfahren nach Anspruch 2, **dadurch gekennzeichnet, dass** Abtastphasen des besagten ersten digitalen modulierten Signals und des besagten dritten digitalen modulierten Signals in Bezug aufeinander synchronisiert werden, indem miteinander synchrone Abtasttaktsignale für das besagte erste digitale modulierte Signal und für das besagte dritte digitale modulierte Signal verwendet werden, und Abtastphasen des besagten zweiten digitalen modulierten Signals und des besagten vierten digitalen modulierten Signals in Bezug aufeinander synchronisiert werden, indem miteinander synchrone Abtasttaktsignale für das besagte zweite digitale modulierte Signal und das besagte vierte digitale modulierte Signal verwendet werden.

7. Verfahren nach Anspruch 2, **dadurch gekennzeichnet, dass** eine Abtastphase des besagten dritten digitalen modulierten Signals mit einer Abtastphase des besagten ersten digitalen modulierten Signals synchronisiert wird, indem neue Abtastwerte für das besagte dritte digitale modulierte Signal interpoliert werden, und eine Abtastphase des besagten vierten digitalen modulierten Signals mit einer Abtastphase des besagten zweiten digitalen modulierten Signals synchronisiert wird, indem neue Abtastwerte für das besagte vierte digitale modulierte Signal interpoliert werden.

8. Verfahren nach Anspruch 4, **dadurch gekennzeichnet, dass** beim Verfahren:

   - Überspannungsisolatoren (63, 64, 65) zur Isolierung des Analog-digital-Wandlers und des Digital-analog-Wandlers galvanisch von Multiplexelementen (11, 13) der Einrichtung (8) verwendet werden,
   - ein Ausgang des Digital-analog-Wandlers an einen Differenzial-Leitungstreiber (60) gekoppelt wird,
   - nichtinvertierende und invertierende Ausgänge des Differenzial-Leitungstreibers an das paarverseilte Kabel (6) über Speisewiderstände (62) galvanisch gekoppelt werden,
   - das paarverseilte Kabel (6) an einen Eingang eines Differenzialverstärkers (61) galvanisch gekoppelt wird und
   - ein Ausgang des Differenzialverstärkers an den Analog-digital-Wandler gekoppelt wird.

9. Verfahren nach Anspruch 1, **gekennzeichnet durch**:

   - Umsetzung eines ersten standardmäßigen Telefonsignals des Teilnehmers in eine erste digitale Abtastsequenz (76) in der Zentralstelle,

- Übertragung der ersten digitalen Abtastsequenz **durch** die Lichtfaser anhand eines teilnehmerspezifischen Hilfskanals von der Zentralstelle zur Einrichtung (8),
- Produzierung eines ersten analogen Telefonsignals in der Einrichtung (8), indem die erste digitale Abtastsequenz in die analoge Form umgesetzt wird,
- Kopplung des ersten analogen Telefonsignals an das paarverseilte Kabel (6) in der Einrichtung (8) **durch** eine Hybride (80), einen Transformator und einen Teilerfilter (73),
- Trennung des besagten zweiten analogen modulierten Signals und eines zweiten analogen Telefonsignals des Teilnehmers voneinander mit dem Teilerfilter (73) in der Einrichtung (8),
- Kopplung des besagten zweiten analogen modulierten Signals vom Teilerfilter an die analogen Teile (5) des besagten DSL-Modems in der Einrichtung (8),
- Produzierung einer zweiten digitalen Abtastsequenz in der Einrichtung (8), indem das zweite analoge Telefonsignal in die digitale Form umgesetzt wird,
- Übertragung der zweiten digitalen Abtastsequenz **durch** die Lichtfaser anhand eines teilnehmerspezifischen Hilfskanals von der Einrichtung (8) zur Zentralstelle und
- Umsetzung der zweiten digitalen Abtastsequenz in ein zweites standardmäßiges Telefonsignal des Teilnehmers in der Zentralstelle.

10. System zur Herstellung eines digitalen Teilnehmeranschlusses zwischen einer Zentralstelle und einer Netzabschlusseinheit (7) eines Teilnehmers, aufweisend:

    - eine Lichtfaser (3) zwischen der Zentralstelle und einer Einrichtung (8),
    - ein paarverseiltes Kabel (6) zwischen der Einrichtung (8) und der Netzabschlusseinheit (7), wobei die Einrichtung fähig ist, ein erstes analoges moduliertes Signal dem paarverseilten Kabel zu senden und ein zweites analoges moduliertes Signal vom paarverseilten Kabel zu empfangen,
    - einen Lichtfasersender in der Zentralstelle, der fähig ist, ein erstes digitales moduliertes Signal der Lichtfaser (3) zu senden,
    - einen Lichtfaserempfänger in der Zentralstelle, der fähig ist, ein zweites digitales moduliertes Signal von der Lichtfaser (3) zu empfangen,
    - einen Lichtfasersender in der Einrichtung (8), der fähig ist, das besagte zweite digitale modulierte Signal der Lichtfaser (3) zu senden und
    - einen Lichtfaserempfänger in der Einrichtung (8), der fähig ist, das besagte erste digitale modulierte Signal von der Lichtfaser (3) zu empfangen,

ferner **gekennzeichnet durch**:

    - ein digitales Sender-Empfänger-Element (1) eines digitalen Teilnehmeranschlussleitungsmodems, im Folgenden DSL-Modems, in der Zentralstelle, das angeordnet ist, das besagte erste digitale modulierte Signal zu erzeugen und das besagte zweite digitale modulierte Signal zu demodulieren, und
    - analoge Teile (5) des besagten DSL-Modems in der Einrichtung (8), die angeordnet sind, das besagte erste analoge modulierte Signal zu produzieren, indem das besagte erste digitale modulierte Signal in die analoge Form umgesetzt wird, und das besagte zweite digitale modulierte Signal zu produzieren, indem das besagte zweite analoge modulierte Signal in die digitale Form umgesetzt wird.

11. System nach Anspruch 10, **gekennzeichnet durch**:

    - eine andere Netzabschlusseinheit (7),
    - ein anderes paarverseiltes Kabel (6) zwischen der Einrichtung (8) und der anderen Netzabschlusseinheit (7),
    - ein digitales Sender-Empfänger-Element (1) eines anderen DSL-Modems in der Zentralstelle, das angeordnet ist, ein drittes digitales moduliertes Signal zu erzeugen und ein viertes digitales moduliertes Signal zu demodulieren,
    - einen Multiplexer in der Zentralstelle, der angeordnet ist, ein erstes digitales gemultiplextes Signal zu produzieren, indem das besagte erste digitale modulierte Signal und das besagte dritte digitale modulierte Signal gemultiplext werden, wobei der Lichtfasersender der Zentralstelle angeordnet ist, das besagte erste digitale gemultiplexte Signal der Lichtfaser (3) zu senden,
    - einen Demultiplexer in der Zentralstelle, der angeordnet ist, das besagte zweite digitale modulierte Signal und das besagte vierte digitale modulierte Signal von einem zweiten digitalen gemultiplexten Signal zu trennen, wobei der Lichtfaserempfänger der Zentralstelle angeordnet ist, das besagte zweite digitale gemultiplexte Signal von der Lichtfaser (3) zu empfangen,
    - einen Demultiplexer in der Einrichtung (8), der angeordnet ist, das besagte erste digitale modulierte Signal und das besagte dritte digitale modulierte Signal vom besagten ersten digitalen gemultiplexten Signal zu trennen, wobei der Lichtfaserempfänger der Einrichtung angeordnet ist, das besagte erste digitale gemultiplexte Signal von der Lichtfaser (3) zu empfangen,
    - analoge Teile (5) des besagten anderen DSL-Modems in der Einrichtung (8), die angeordnet sind, ein drittes analoges moduliertes Signal zu produzieren, indem das besagte dritte digitale modulierte Signal in die analoge Form umgesetzt wird, das besagte dritte analoge modulierte Signal dem anderen paarverseilten Kabel (6) zu senden, ein viertes analoges moduliertes Signal vom anderen paarverseilten Kabel (6) zu empfangen und das besagte vierte digitale modulierte Signal zu produzieren, indem das besagte vierte analoge modulierte Signal in die digitale Form umgesetzt wird,

- einen Multiplexer in der Einrichtung (8), der angeordnet ist, das besagte zweite digitale gemultiplexte Signal zu produzieren, indem das besagte zweite digitale modulierte Signal und das besagte vierte digitale modulierte Signal gemultiplext werden, wobei der Lichtfasersender der Einrichtung angeordnet ist, das besagte zweite digitale gemultiplexte Signal der Lichtfaser (3) zu senden.

12. System nach Anspruch 10, **dadurch gekennzeichnet , dass** das digitale Sender-Empfänger-Element (1) des besagten DSL-Modems Mittel zur Bestimmung von durch die analogen Teile (5) des besagten DSL-Modems benötigter Steuerinformation aufweist und der Lichtfasersender der Zentralstelle und der Lichtfaserempfänger der Einrichtung angeordnet sind, zumindest einen Hilfskanal über der Lichtfaser (3) bereitzustellen, um die Steuerinformation vom digitalen Sender-Empfänger-Element (1) des besagten DSL-Modems den analogen Teilen (5) des besagten DSL-Modems zu übertragen.

13. System nach Anspruch 10, **dadurch gekennzeichnet , dass** die analogen Teile (5) des besagten DSL-Modems einen Analog-digital-Wandler, einen Digital-analog-Wandler, einen Leitungstreiber und eine Leitungshybride aufweisen.

14. System nach Anspruch 13, **gekennzeichnet durch**:

- einen ersten Taktgenerator (35), der angeordnet ist, ein Abtasttaktsignal für einen Senderteil des digitalen Sender-Empfänger-Elements (1) des besagten DSL-Modems und ein Abtasttaktsignal für den Lichtfasersender (30) der Zentralstelle zu erzeugen,
- ein erstes Regeneratorelement (34), das angeordnet ist, aufgrund eines vom Lichtfaserempfänger (33) der Zentralstelle regenerierten Taktsignals ein Abtasttaktsignal für einen Empfängerteil des digitalen Sender-Empfänger-Elements (1) des besagten DSL-Modems zu erzeugen,
- ein zweites Regeneratorelement (36), das angepasst ist, aufgrund eines vom Lichtfaserempfänger der Einrichtung (8) regenerierten Taktsignals Abtasttaktsignale für den Digital-analog-Wandler, für den Analog-digital-Wandler und für den Lichtfasersender der Einrichtung (8) zu erzeugen.

15. System nach Anspruch 11, **dadurch gekennzeichnet , dass** das digitale Sender-Empfänger-Element (1) des besagten DSL-Modems und das digitale Sender-Empfänger-Element (1) des besagten anderen DSL-Modems angeordnet sind, Abtastphasen des besagten ersten digitalen modulierten Signals und des besagten dritten digitalen modulierten Signals in Bezug aufeinander zu synchronisieren, indem miteinander synchrone Abtasttaktsignale für das besagte erste digitale modulierte Signal und das besagte dritte digitale modulierte Signal verwendet werden, und das digitale Sender-Empfänger-Element (1) des besagten DSL-Modems und das digitale Sender-Empfänger-Element (1) des besagten anderen DSL-Modems angeordnet sind, Abtastphasen des besagten zweiten digitalen modulierten Signals und des besagten vierten digitalen modulierten Signals in Bezug aufeinander zu synchronisieren, indem miteinander synchrone Abtasttaktsignale für das besagte zweite digitale modulierte Signal und das besagte vierte digitale modulierte Signal verwendet werden.

16. System nach Anspruch 11, **dadurch gekennzeichnet , dass** das System ein erstes Interpolatorelement (40) aufweist, das angeordnet ist, eine Abtastphase des besagten dritten digitalen modulierten Signals mit einer Abtastphase des besagten ersten digitalen modulierten Signals zu synchronisieren, indem neue Abtastwerte für das besagte dritte digitale modulierte Signal interpoliert werden, und ein zweites Interpolatorelement (41) angeordnet ist, eine Abtastphase des besagten vierten digitalen modulierten Signals mit einer Abtastphase des besagten zweiten digitalen modulierten Signals zu synchronisieren, indem neue Abtastwerte für das besagte vierte digitale modulierte Signal interpoliert werden.

17. System nach Anspruch 13, **gekennzeichnet durch**:

- Überspannungsisolatoren (63, 64, 65), die angeordnet sind, den Analog-digital-Wandler und den Digital-analog-Wandler galvanisch von Multiplexelementen (11, 13) der Einrichtung (8) zu isolieren,
- einen Differenzial-Leitungstreiber (60), der an einen Ausgang des Digital-analog-Wandlers gekoppelt ist,
- Speisewiderstände (62), die an nicht-invertierende und invertierende Ausgänge des Differenzial-Leitungstreibers und an das paarverseilte Kabel (6) galvanisch gekoppelt sind,

- einen Differenzialverstärker (61), dessen Eingang galvanisch an das paarverseilte Kabel (6) und dessen Ausgang an den Analog-digital-Wandler gekoppelt sind.

18. System nach Anspruch 10, **dadurch gekennzeichnet , dass** der Lichtfasersender der Zentralstelle und der Lichtfaserempfänger der Einrichtung (8) angeordnet sind, eine erste digitale Abtastsequenz (76) von der Zentralstelle zur Einrichtung (8) durch die Lichtfaser über einen ersten teilnehmerspezifischen Hilfskanal zu übertragen, der Lichtfasersender der Einrichtung (8) und der Lichtfaserempfänger der Zentralstelle angeordnet sind, eine zweite digitale Abtastsequenz (79) von der Einrichtung (8) zur Zentralstelle durch die Lichtfaser über einen zweiten teilnehmerspezifischen Hilfskanal zu übertragen, und aufweisend:

- ein erstes Wandlerelement (77) in der Zentralstelle, das angeordnet ist, ein erstes standardmäßiges Telefonsignal des Teilnehmers in die erste digitale Abtastsequenz umzusetzen,
- einen Digital-analog-Wandler (70) in der Einrichtung (8), der angeordnet ist, ein erstes analoges Telefonsignal zu produzieren, indem die erste digitale Abtastsequenz in die analoge Form umgesetzt wird,
- einen Analog-digital-Wandler (74) in der Einrichtung (8), der angeordnet ist, die zweite digitale Abtastsequenz zu produzieren, indem ein zweites analoges Telefonsignal in die digitale Form umgesetzt wird,
- eine Hybride (80), einen Transformator (81) und einen Teilerfilter (73) in der Einrichtung (8), die angeordnet sind, das erste analoge Telefonsignal von einem Ausgang des Digital-analog-Wandlers (70) zum paarverseilten Kabel (6) zu leiten und das zweite analoge Telefonsignal vom paarverseilten Kabel (6) zu einem Eingang des Analog-digital-Wandlers (74) zu leiten, wobei der Teilerfilter (74) auch angeordnet ist, das besagte zweite analoge modulierte Signal vom paarverseilten Kabel (6) zu den analogen Teilen (5) des besagten DSL-Modems zu leiten und das besagte erste analoge modulierte Signal von den analogen Teilen (5) des besagten DSL-Modems zum paarverseilten Kabel (6) zu leiten, und

- ein zweites Wandlerelement (78) in der Zentralstelle, das angeordnet ist, die zweite digitale Abtastsequenz in ein zweites standardmäßiges Telefonsignal des Teilnehmers umzusetzen.

## Revendications

1. Procédé d'établissement d'une connexion d'abonné numérique entre un central et un élément terminal de réseau (7) d'un abonné, le procédé consistant à

- transférer par une fibre optique (3) un premier signal numérique modulé en provenance du central à un équipement (8),
- produire dans l'équipement un premier signal analogique modulé par convertissant ledit premier signal numérique modulé en forme analogique,
- transférer par un câble à paires (6) ledit premier signal analogique modulé en provenance de l'équipement à l'élément terminal de réseau,
- générer dans l'élément terminal de réseau un second signal analogique modulé,
- transférer par le câble à paires ledit second signal analogique modulé en provenance de l'élément terminal de réseau à l'équipement,
- produire dans l'équipement un second signal numérique modulé par convertissant ledit second signal analogique modulé en forme numérique, et
- transférer par la fibre optique ledit second signal numérique modulé de l'équipement au central,

**caractérisé en ce que** dans le procédé

- un élément émetteur-récepteur numérique (1) d'un modem de ligne d'abonné numérique, ci-après modem DSL, est utilisé dans le central pour générer ledit premier signal numérique modulé,
- des parties analogiques (5) dudit modem DSL sont utilisées dans l'équipement pour la production dudit premier signal analogique modulé et pour la production dudit second signal numérique modulé, et
- l'élément émetteur-récepteur numérique dudit modem DSL est utilisé dans le central pour la démodulation dudit second signal numérique modulé.

2. Procédé selon la revendication 1, **caractérisé en ce que** dans le procédé

- ledit premier signal numérique modulé est multiplexé avec un troisième signal numérique modulé dans le central, ledit troisième signal numérique modulé étant généré avec un élément émetteur-récepteur numérique d'un autre modem DSL,
- ledit premier signal numérique modulé et ledit troisième signal numérique modulé sont transférés par fibre optique (3) du central à l'équipement (8) comme un premier signal multiplexé,
- ledit premier signal numérique modulé et ledit troisième signal numérique modulé sont démultiplexés dudit premier signal multiplexé dans l'équipement,
- un troisième signal analogique modulé est produit dans l'équipement par convertissant ledit troisième signal numérique modulé en forme analogique à l'aide des parties analogiques (5) dudit autre modem DSL,
- ledit troisième signal analogique modulé est transféré par un autre câble à paires (6) de l'équipement à un autre élément terminal de réseau (7),
- un quatrième signal analogique modulé est généré dans l'autre élément terminal de réseau (7),
- ledit quatrième signal analogique modulé est transféré à travers l'autre câble à paires (6) de l'élément terminal de réseau (7) à l'équipement (8),
- un quatrième signal numérique modulé est produit dans l'équipement (8) par convertissant ledit quatrième signal analogique modulé en forme numérique à l'aide des les parties analogiques (5) dudit autre modem DSL,
- ledit quatrième signal numérique modulé est multiplexé dans l'équipement avec ledit second signal numérique modulé,
- ledit second signal numérique modulé et ledit quatrième signal numérique modulé sont transférés par la fibre (3) de l'équipement au central comme un second signal multiplexé,
- ledit second signal numérique modulé et ledit quatrième signal numérique modulé sont démultiplexés dudit second signal multiplexé dans le central, et
- ledit quatrième signal numérique multiplexé est démodulé dans le central avec l'élément émetteur-récepteur numérique (1) dudit autre modem DSL.

3. Procédé selon la revendication 1, **caractérisé en ce que** l'information de commande pour les parties analogiques (5) dudit modem DSL est déterminée dans les éléments émetteur-récepteur numériques (1) dudit modem DSL, et ladite information de commande est transférée par la fibre optique du central à l'équipement en utilisant une voie auxiliaire disposée sur fibre optique.

4. Procédé selon la revendication 1, **caractérisé en ce que** les parties analogiques (5) dudit modem DSL comportent un convertisseur numérique-analogique (15), un convertisseur analogique-numérique (18), un driver de ligne et un hybride de ligne, ledit premier signal numérique modulé étant un signal d'entrée du convertisseur numérique-analogique, et un signal de sortie du convertisseur analogique-numérique étant ledit second signal numérique modulé.

5. Procédé selon la revendication 4, **caractérisé en ce que** dans le procédé on utilise

   - un premier générateur d'horloge (35) pour produire des signaux d'horloge d'échantillonnage pour une partie émetteur de l'élément émetteur-récepteur (1) numérique dudit modem DSL et pour un émetteur à fibre optique du central,
   - un premier régénérateur d'horloge (34) pour produire un signal d'horloge d'échantillonnage pour une partie récepteur de l'élément émetteur-récepteur numérique (1) dudit modem DSL, le premier régénérateur d'horloge (34) étant commandé au moyen d'un signal d'horloge régénéré par un récepteur à fibre optique (33) du central, et
   - un second régénérateur d'horloge (36) pour produire des signaux d'horloge d'échantillonnage pour le convertisseur numérique-analogique, pour le convertisseur analogique-numérique et pour un émetteur à fibre optique (32) de l'équipement (8), le second régénérateur d'horloge (34) étant commandé au moyen d'un signal d'horloge régénéré par un récepteur à fibre optique de l'équipement (8).

6. Procédé selon la revendication 2, **caractérisé en ce que** les phases d'échantillonnage dudit premier signal numérique modulé et dudit troisième signal numérique modulé sont synchronisées l'une par rapport à l'autre par utilisant des signaux d'horloge d'échantillonnage mutuellement synchronisés pour ledit premier signal numérique modulé et pour ledit troisième signal numérique modulé, et les phases d'échantillonnage dudit second signal numérique modulé et dudit quatrième signal numérique modulé sont synchronisées l'une par rapport à l'autre par utilisant des signaux d'horloge d'échantillonnage mutuellement synchronisés pour ledit second signal numérique modulé et ledit quatrième signal numérique modulé.

7. Procédé selon la revendication 2, **caractérisé en ce qu'**une phase d'échantillonnage dudit troisième signal numérique modulé est synchronisée avec une phase d'échantillonnage dudit premier signal numérique modulé par interpolant des nouvelles valeurs d'échantillonnage pour ledit troisième signal numérique modulé et une phase d'échantillonnage dudit quatrième signal numérique modulé est synchronisée avec une phase d'échantillonnage dudit second signal numérique modulé par interpolant des nouvelles valeurs d'échantillonnage pour ledit quatrième signal numérique modulé.

8. Procédé selon la revendication 4, **caractérisé en**

ce que dans le procédé

- des isolateurs de surtension (63, 64, 65) sont utilisés pour isoler le convertisseur analogique-numérique et le convertisseur numérique-analogique galvaniquement des éléments de multiplexage (11, 13) de l'équipement (8),
- une sortie du convertisseur numérique-analogique est connectée à un driver de ligne différentiel (60),
- les sorties non-inverseur et inverseur du driver de ligne différentiel sont connectées galvaniquement au câble à paires (6) par des résistance d'alimentation (62),
- le câble à paires (6) est connecté galvaniquement à une entrée d'un amplificateur différentiel (61) et
- une sortie de l'amplificateur différentiel est connectée au convertisseur analogique-numérique.

9. Procédé selon la revendication 1, **caractérisé en ce que** le procédé consiste à

- convertir, dans le central, un premier signal téléphonique conforme à la norme de l'abonné en première séquence d'échantillonnage numérique (76),
- transférer la première séquence d'échantillonnage numérique par fibre optique au moyen d'une voie auxiliaire propre à l'abonné du central à l'équipement (8),
- produire, dans l'équipement (8), un premier signal téléphonique analogique par convertissant la première séquence d'échantillonnage numérique en forme analogique,
- connecter, dans l'équipement (8), le premier signal téléphonique analogique au câble à paires (6) à travers un hybride (80), un transformateur et un filtre diviseur (73),
- séparer, dans l'équipement (8), ledit second signal analogique modulé et un second signal téléphonique analogique de l'abonné l'un de l'autre à l'aide du filtre diviseur (73),
- connecter, dans l'équipement (8), ledit second signal analogique modulé en provenance du filtre diviseur aux parties analogiques (5) dudit modem DSL,
- produire, dans l'équipement (8), une seconde séquence d'échantillonnage numérique par convertissant le second signal téléphonique analogique en forme numérique,
- transférer la seconde séquence d'échantillonnage numérique par fibre optique au moyen d'une voie auxiliaire propre à l'abonné de l'équipement (8) au central, et
- convertir, dans le central, la seconde séquence d'échantillonnage numérique en second signal téléphonique conforme à la norme de l'abonné.

10. Système pour l'établissement d'une connexion d'abonné numérique entre un central et un élément terminal de réseau (7) de l'abonné, le système comportant :

- une fibre optique (3) entre le central et un équipement (8),
- un câble à paires (6) entre l'équipement (8) et l'élément terminal de réseau (7), l'équipement étant capable d'émettre un premier signal analogique modulé au câble à paires et de recevoir un second signal analogique modulé en provenance du câble à paires,
- dans le central, un émetteur à fibre optique capable d'émettre un premier signal numérique modulé à la fibre optique (3),
- dans le central, un récepteur à fibre optique capable de recevoir un second signal numérique modulé en provenance de la fibre optique (3),
- dans l'équipement (8), un émetteur à fibre optique capable d'émettre ledit second signal numérique modulé à la fibre optique (3), et
- dans l'équipement (8), un récepteur à fibre optique capable de recevoir ledit premier signal numérique modulé en provenance de la fibre optique (3),

**caractérisé en ce que** le système comporte en outre :

- dans le central, un élément émetteur-récepteur numérique (1) d'un modem de ligne d'abonné numérique, ci-après modem DSL, disposé à générer ledit premier signal numérique modulé et à démoduler ledit second signal numérique modulé, et
- dans l'équipement (8), des parties analogiques (5) dudit modem DSL disposées à produire ledit premier signal analogique modulé par convertissant ledit premier signal numérique modulé en forme analogique et à produire ledit second signal numérique modulé par convertissant ledit second signal analogique modulé en forme numérique.

11. Système selon la revendication 10, **caractérisé en ce que** le système comporte :

- un autre élément terminal de réseau (7),
- un autre câble à paires (6) entre l'équipement (8) et l'autre élément terminal de réseau (7),
- dans le central, un élément émetteur-récepteur numérique (1) d'un autre modem DSL disposé à générer un troisième signal numérique modulé et à démoduler un quatrième signal numérique modulé,

- dans le central, un multiplexeur disposé à produire un premier signal numérique multiplexé par multiplexant ledit premier signal numérique modulé et ledit troisième signal numérique modulé, l'émetteur à fibre optique du central étant disposé à émettre ledit premier signal numérique multiplexé à la fibre optique (3),

- dans le central, un démultiplexeur disposé à séparer ledit second signal numérique modulé et ledit quatrième signal numérique modulé d'un second signal numérique multiplexé, le récepteur à fibre optique du central étant disposé à recevoir ledit second signal numérique multiplexé en provenance de la fibre optique (3),

- dans l'équipement (8), un démultiplexeur disposé à séparer ledit premier signal numérique modulé et ledit troisième signal numérique modulé dudit premier signal numérique multiplexé, le récepteur à fibre optique de l'équipement étant disposé à recevoir ledit premier signal numérique multiplexé en provenance de la fibre optique (3),

- dans l'équipement (8), des parties analogiques (5) dudit autre modem DSL disposé à produire un troisième signal analogique modulé par convertissant ledit troisième signal numérique modulé en forme analogique, à émettre ledit troisième signal analogique modulé à l'autre câble à paires (6), à recevoir un quatrième signal analogique modulé en provenance de l'autre câble à paires (6) et à produire ledit quatrième signal numérique modulé par convertissant ledit quatrième signal analogique modulé en forme numérique,

- dans l'équipement (8), un multiplexeur disposé à produire ledit second signal numérique multiplexé par multiplexant ledit second signal numérique modulé et ledit quatrième signal numérique modulé, l'émetteur à fibre optique de l'équipement étant disposé à émettre ledit second signal numérique multiplexé à la fibre optique (3).

**12.** Système selon la revendication 10, **caractérisé en ce que** l'élément émetteur-récepteur numérique dudit modem DSL comporte des moyens pour déterminer l'information de commande requise par les parties analogiques (5) dudit modem DSL, et l'émetteur à fibre optique du central et le récepteur à fibre optique de l'équipement sont disposés à pourvoir au moins une voie auxiliaire sur fibre optique (3) pour transférer l'information de commande en provenance de l'élément émetteur-récepteur numérique (1) dudit modem DSL aux parties analogiques (5) dudit modem DSL.

**13.** Système selon la revendication 10, **caractérisé en ce que** les parties analogiques (5) dudit modem DSL comportent un convertisseur analogique-numérique, un convertisseur numérique-analogique, un driver de ligne et un hybride de ligne.

**14.** Système selon la revendication 13, **caractérisé en ce que** le système comporte

- un premier générateur d'horloge (35) disposé à générer un signal d'horloge d'échantillonnage pour une partie émetteur de l'élément émetteur-récepteur numérique (1) dudit modem DSL et un signal d'horloge d'échantillonnage pour l'émetteur à fibre optique (30) du central,

- un premier élément régénérateur (34) disposé à régénérer, sur la base d'un signal d'horloge d'échantillonnage régénéré par le récepteur à fibre optique (33) du central, un signal d'horloge d'échantillonnage pour une partie récepteur de l'élément émetteur-récepteur numérique (1) dudit modem DSL,

- un second élément régénérateur (36) est adapté à générer, sur la base d'un signal d'horloge régénéré par le récepteur à fibre optique de l'équipement (8), des signaux d'horloge d'échantillonnage pour le convertisseur numérique-analogique, pour le convertisseur analogique-numérique et pour l'émetteur à fibre optique de l'équipement (8).

**15.** Système selon la revendication 11, **caractérisé en ce que** l'élément émetteur-récepteur numérique (1) dudit modem DSL et l'élément émetteur-récepteur numérique (1) dudit autre modem DSL sont disposés à synchroniser les phases d'échantillonnage dudit premier signal numérique modulé et dudit troisième signal numérique modulé l'une avec l'autre par utilisant des signaux d'horloge d'échantillonnage mutuellement synchronisés pour ledit premier signal numérique modulé et ledit troisième signal numérique modulé, et l'élément émetteur-récepteur numérique (1) dudit modem DSL et l'élément émetteur-récepteur numérique (1) dudit autre modem DSL sont arrangés à synchroniser les phases d'échantillonnage dudit second signal numérique modulé et dudit quatrième signal numérique modulé l'une avec l'autre par utilisant des signaux d'horloge d'échantillonnage mutuellement synchronisés pour ledit second signal numérique modulé et ledit quatrième signal numérique modulé.

**16.** Système selon la revendication 11, **caractérisé en ce que** le système comporte un premier élément interpolateur (40) disposé à synchroniser une phase d'échantillonnage dudit troisième signal numérique modulé avec la phase d'échantillonnage dudit premier signal numérique modulé par interpolant des nouvelles valeurs d'échantillonnage pour ledit troisième signal numérique modulé et un second élément interpolateur (41) disposé à synchroniser une phase d'échantillonnage dudit quatrième signal numérique modulé avec une phase d'échantillonnage dudit second signal numérique modulé par interpolant des nouvelles valeurs d'échantillonnage pour ledit quatrième signal numérique modulé.

17. Système selon la revendication 13, **caractérisé en ce que** le système comporte

- des isolateurs de surtension (63, 64, 65) disposés à isoler le convertisseur analogique-numérique et le convertisseur numérique-analogique galvaniquement des éléments de multiplexage (11, 13) de l'équipement (8),
- un driver de ligne différentiel (60) connecté à une sortie du convertisseur numérique-analogique,
- des résistances d'alimentation (62) connectées galvaniquement aux sorties non-inverseur et inverseur du driver de ligne différentiel et au câble à paires (6),
- un amplificateur différentiel (61) dont une entrée est connectée galvaniquement au câble à paires (6) et dont une sortie est connectée au convertisseur analogique-numérique.

18. Système selon la revendication 10, **caractérisé en ce que** l'émetteur à fibre optique du central et le récepteur à fibre optique de l'équipement (8) sont disposés à transférer une première séquence d'échantillonnage numérique (76) en provenance du central à l'équipement (8) à travers la fibre optique par une première voie auxiliaire propre à l'abonné, l'émetteur à fibre optique de l'équipement (8) et le récepteur à fibre optique du central sont disposés à transférer une seconde séquence d'échantillonnage numérique (79) en provenance de l'équipement au central à travers la fibre optique par une seconde voie auxiliaire propre à l'abonné, et le système comporte

- dans le central, un premier élément convertisseur (77) disposé à convertir un premier signal conforme à la norme de l'abonné en première séquence d'échantillonnage numérique,
- dans l'équipement (8), un convertisseur numérique-analogique (70) disposé à produire un premier signal téléphonique analogique par convertissant la première séquence d'échantillonnage numérique en forme analogique,
- dans l'équipement (8), un convertisseur analogique-numérique (74) disposé à produire la seconde séquence d'échantillonnage numérique par convertissant un second signal téléphonique analogique en forme numérique,
- dans l'équipement (8), un hybride (80), un transformateur (81) et un filtre diviseur (73) disposés à passer le premier signal téléphonique analogique en provenance d'une sortie du convertisseur numérique-analogique (70) au câble à paires (6) et à passer le second signal téléphonique analogique en provenance du câble à paires (6) à une entrée du convertisseur analogique-numérique (74), le filtre diviseur (74) étant également disposé à passer ledit second signal analogique modulé en provenance du câble à paires (6) aux parties analogiques (5) dudit modem DSL et à passer ledit premier signal analogique modulé en provenance des parties analogiques (5) dudit modem DSL au câble à paires (6), et
- dans le central, un second élément convertisseur (78) disposé à convertir la seconde séquence d'échantillonnage numérique en seconde signal téléphonique conforme à la norme de l'abonné.

FIG. 1

**FIG. 2**

**FIG. 3**

FIG. 4

FIG. 5

**FIG. 6**

**FIG. 7**

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5526154 A

- WO 0033489 A

**Non-patent literature cited in the description**

- **HO et al.** Broadband Access Using Sub-carrier Multiplexing and Asymmetric Digital Subscriber Lines. *IEEE,* 1998

- **HEINRICH MEYER ; MARC MOENELAEY ; STEFAN A. FECHTEL.** Digital Communication Receivers. John Wiley & Sons, Inc